# EUROPÄISCHE PATENTSCHRIFT

(11) **EP 0 652 908 B1**
(45) Veröffentlichungstag und Bekanntmachung des Hinweises auf die Patenterteilung: **23.04.1997**
(21) Anmeldenummer: 93914685.8
(22) Anmeldetag: 22.06.1993
(51) Int. Cl.: C08L 77/00, C08K 5/06

(54) **POLYAMIDMASSE UND VERFAHREN ZUR HERSTELLUNG**
POLYAMIDE COMPOUNDS AND PROCESS FOR THEIR PRODUCTION
MASSES DE POLYAMIDE ET LEUR PROCEDE DE FABRICATION

(30) Priorität: 25.07.1992 DE 4224668; 01.02.1993 DE 4302703
(43) Veröffentlichungstag der Anmeldung: 17.05.1995
(73) Patentinhaber: A. SCHULMAN GMBH, D-50170 Kerpen (DE)
(72) Erfinder: CHRIST, Hubert, D-5161 Golzheim-Merzenich (DE); SCHNEIDER, Wolfgang, D-5024 Stommeln (DE)
(74) Vertreter: Godemeyer, Thomas, Dr.
(86) Internationale Anmeldenummer: EP9301580
(87) Internationale Veröffentlichungsnummer: WO9402548

(56) Entgegenhaltungen:
- Keine einschlägigen Dokumente gefunden

## Beschreibung

Gegenstand der Erfindung sind Polyamidmassen, ein Verfahren zur Herstellung derselben und ein Verfahren zur Erhöhung der Schlagfestigkeit, der Kerbschlagfestigkeit und der Viskosität von flammfesten, halogenfreien Polyamiden. Ein weiterer Gegenstand der Erfindung ist ein Verfahren zur Erhöhung der Molmassen von Polyamiden.

Flammfest ausgerüstete, halogenfreie Polyamide gewinnen in jüngster Zeit zunehmend an Bedeutung. Dabei besteht ein besonderes Interesse an Polyamiden in hellen Farbeinstellungen für den Elektrobereich. Aus der EP 0 019 768 ist es bekannt, Polyamide dadurch flammfest auszurüsten, daß roter Phosphor in Kombination mit Melamincyanurat zugegeben wird. Aus der EP 0 122 693 ist es bekannt, halogenhaltige Flammschutzmittel in Kombination mit Melamincyanurat anzuwenden.

Die DE 27 40 092 beschreibt eine Polyamidharzmasse mit einem Gehalt von 21 Gew.-% Melamincyanurat Flammschutzmittel, das zur Vermeidung von Ausblühungen und Ausplattungen in der Polyamidharzmasse enthalten ist. Dieser Zusatz bewirkt eine zufriedenstellende Flammfestcharakteristik und führt dazu, daß sich die Polyamidharzmasse zur Herstellung von Formkörpern eignet. Weiterhin neigt die so hergestellte Polyamidharzmasse weder zur Ausplattung noch zu Ausblühungen. Unter "Ausplattung" wird die Sublimation des zugesetzten Melamins bei der Formung der Polyamidmasse verstanden, das sublimierte Melamin scheidet sich dann auf der Form ab. Dabei kommt es zu unerwünschtem Ablösen oder zu einer Verfleckung des Formkörpers bei Alterung desselben. Das Melamin wird dabei an die Oberfläche des Formkörpers ausgewaschen. Diese Erscheinung wird als "Ausblühung" bezeichnet. Das Aussehen so erhaltener Formkörper ist aufgrund von Fleckenbildung nicht zufriedenstellend.

Die DE 32 08 486 beschreibt ebenfalls eine flammfeste Polyamid-Formmasse, die mit dem Umsetzungsprodukt von Cyanursäure mit Melamin in fein verteilter Form versetzt wird.

Der Nachteil des bisherigen Standes der Technik ist es, daß bei der flammfesten Ausrüstung von Polyamiden mit Hilfe von Melamincyanuraten die Schlagfestigkeit, Kerbschlagfestigkeit und die Viskosität des Polyamides verringert wird. In Beispiel 5 und Tabelle 1 der DE C2 32 08 486 ist ein flammfestes Polyamid 66 beschrieben mit einem Gehalt von 4 Gew.-% Melamin und 6 Gew.-% Melamincyanurat (1:1). Aus Tabelle 3 in Beispiel 13 der Druckschrift ist zu entnehmen, daß aus dem Polyamid aus Beispiel 5 Testkörper hergestellt wurden, die mit den entsprechenden nicht flammfest ausgerüsteten Testkörpern aus Polyamid 66 verglichen wurden. Aus Tabelle 3 ist zu entnehmen, daß sich die mechanischen Werte bei flammfesten Polyamiden gegenüber den unbehandelten Polyamiden erheblich verschlechtern, insbesondere die Viskosität abnimmt (Seite 7, Zeile 33).

Das technische Problem der Erfindung war es daher, eine halogenfreie, flammfeste Polyamidmasse zur Verfügung zu stellen, die trotz ihrer Flammfestigkeit hervorragende Eigenschaften bezüglich der Schlagfestigkeit, Kerbschlagfestigkeit und Viskosität besitzt.

Dieses technische Problem wird dadurch gelöst, daß die erfindungsgemäßen Polyamidmassen, die halogenfrei und/oder flammfest sein können, bezogen auf die Polyamidmasse 0,1 bis 1 Gew.-% Terephthaldialdehyd und/oder seine Acetale von C₁-C₄ Alkoholen und gegebenenfalls 3 bis 30 Gew.-% Melamin und/ oder Melamincyanurat enthalten.

In einer besonderen Ausführungsform sind 5 bis 25 Gew.-% Melamin und/oder Melamincyanurat und 0,1 bis 0,6 Gew.-% Terephthaldialdehyd und/oder seine Acetale von C₁ - C₄ Alkoholen enthalten.

In einer besonderen Ausführungsform kann die Polyamidmasse zusätzlich Talkum enthalten. Weiterhin können zusätzlich Färbemittel, Füll- und Verstärkungsstoffe, Stabilisatoren und Plastifiziermittel enthalten sein.

Ein weiterer Gegenstand der Erfindung ist ein Verfahren zur Herstellung der Polyamidmassen, wobei die Komponenten mit dem Polyamid gemischt und anschließend geschmolzen und gegebenenfalls extrudiert werden. Die erfindungsgemäßen Zusätze führen zu einer Erhöhung der Schlagfestigkeit, der Kerbschlagfestigkeit und der Viskosität bei Beibehaltung der Flammfestigkeit halogenfreier Polyamide.

Die Wirkung auf die mechanischen Eigenschaften der erfindungsgemäßen Polyamide, die bei dem Zusatz von Terephthaldialdehyd oder seinen Acetalen zu Melamincyanurat entstehen, war überraschend, da der Fachmann erwarten konnte, daß Melamincyanurat direkt mit den aktiven Gruppen des Terephthaldialdehydes abreagiert und sich aus diesem Grunde die Eigenschaften des Polyamides überhaupt nicht verändern. Stattdessen erhält das Polyamid durch den Zusatz von Terephthaldialdehyd und/oder seine Acetale von C₁ - C₄ Alkoholen eine wesentliche Verbesserung seiner mechanischen Eigenschaften, nämlich eine erhöhte Schlagfestigkeit, eine erhöhte Kerbschlagfestigkeit und eine erhöhte Viskosität bei gleichem oder verbessertem Flammschutzeffekt.

Die erfindungsgemäßen Polyamidformmassen eignen sich zur Herstellung von Formkörpern für den technischen Bereich, speziell für den Elektrobereich. Besonders vorteilhaft werden sie dort eingesetzt, wo sie mit Spannung führenden Teilen in Berührung kommen. Als Beispiel seien Steckverbindungen, Reihenklemmen oder Luftschütze genannt.

Die in den Massen enthaltenen Polyamide sind an sich bekannt und umfassen die halbkristallinen und die amorphen Harze mit Molekulargewichten (Gewichtsmittelwerten) von mindestens 5.000, die gewöhnlich als Nylon bezeichnet werden. Solche Polyamide sind z.B. in den US-Patenten 2 071 250, 2 071 251, 2 130 523, 2 130 948, 2 241 322, 2 312 966, 2 512 606 und 3 393 210 beschrieben.

Die Polyamide können z.B. durch Kondensation äquimolarer Mengen einer gesättigten oder einer aromatischen Dicarbonsäure mit 4 bis 12 Kohlenstoffatomen mit einem Diamin, welches bis 14 Kohlenstoffatome aufweist, oder durch Kondensation von ω- Aminocarbonsäuren oder Polyaddition von Lactamen hergestellt werden.

Beispiele für Polyamide sind Polyhexamethylenadipinsäureamid (Nylon 66), Polyhexamethylenazelainsäureamid (Nylon 69), Polyhexamethylensebacinsäureamid (Nylon 610), Polyhexamethylendodecandisäureamid (Nylon 612). Weiterhin auch die durch Ringöffnung von Lactamen erhaltenen Polyamide wie Polycaprolactam, Polylaurinsäurelactam, Poly-11-aminoundecansäure und ein Polyamid aus Di(p-aminocyclohexyl)-methan und Dodecandisäure.

Es ist auch möglich, gemäß der Erfindung Polyamide zu verwenden, die durch Copolykondensation von zwei oder mehr der oben genannten Polymere oder ihrer Komponenten hergestellt worden sind, z.B. Copolymere aus Adipinsäure, Isophthalsäure oder Terephthalsäure und Hexamethylendiamin oder Copolymere aus Caprolactam, Terephthalsäure und Hexamethylendiamin. Bevorzugt werden lineare Polyamide mit einem Schmelzpunkt über 200°C.

Bevorzugte Polyamide sind Polyhexamethylenadipinsäureamid, Polyhexamethylensebacinsäureamid und Polycaprolactam. Die Polyamide weisen im allgemeinen eine relative Viskosität von 2,5 bis 5 auf, bestimmt an einer 1 gew.-%igen Lösung in 96 %iger Schwefelsäure bei 23°C, was einem Molekulargewicht von etwa 15.000 bis 45.000 entspricht. Polyamide mit einer relativen Viskosität von 2,5 bis 3,5, insbesondere 2,6 bis 3,4 werden bevorzugt verwendet.

Außerdem können auch Polyamide verwendet werden, die z.B. durch Kondensation von 1,4-Diaminobutan mit Adipinsäure bei erhöhter Temperatur erhältlich sind (Polyamid-4,6). Herstellungsverfahren für solche Polyamide beschreiben die EP-A 38 094, EP-A 38 582 und EP-A 39 524.

Überraschenderweise wurde festgestellt, daß auch bei nicht flammfest ausgerüsteten Polyamiden eine signifikante Erhöhung der Viskosität und damit der Molmasse durch Beimischung von Terephthaldialdehyd und seiner Derivate erreicht werden kann.

Ein weiterer Gegenstand der Erfindung ist daher ein Verfahren zur Erhöhung der Molmassen von Polyamidmassen unter Verwendung von Terephthaldialdehyd oder seiner Acetale von C₁ - C₄ Alkoholen.

Bei den bisher bekannten Synthesen von Polyamiden werden verfahrensbedingt Polymerisationsgrade/Molekulargewichte erreicht, die kommerziellen Ansprüchen genügen. Höhere Molekulargewichte werden z.B. über thermische Nachpolykondensation in der Festphase realisiert.

In der DE-OS 38 31 707 werden ein Verfahren zur beschleunigten Polyamidherstellung während der Schmelzpolykondensation unter Verwendung von Aminocaprolactam und/oder Lysinkomponenten und unter Zusatz von Katalysatoren, eine beschleunigte Festphasen-Nachpolykondensation der katalysatorhaltigen (Co-)Polyamide und die nach dem Verfahren hergestellten Polyamide beschrieben.

Die DE-OS 38 31 708 beinhaltet ein Verfahren zur Festphasen-Nachpolykondensation von (Co-)Polyamiden, welche geringe Mengen an Lysin-Komponenten und dazu etwa äquivalente Mengen einer Polycarbonsäure eingebaut enthalten. Es werden in verkürzter Reaktionszeit thermoplastisch verformbare, leicht verzweigte, aliphatische (Co-)Polyamide mit erhöhter Schmelzviskosität und ausgeprägter Strukturviskosität erhalten. Um entsprechende Eigenschaften zu erreichen, sind trotzdem Reaktionszeiten bis zu mehreren Stunden notwendig. Die Polyamide werden in dieser zweiten, energieintensiven Verfahrensstufe thermisch über einen längeren Zeitraum belastet.

Die DE-OS 27 02 306 beschreibt ein Verfahren zur Herstellung von Polyamiden mit hoher Viskosität, im Schmelzzustand unter Zugabe eines Alkylencarbonats in die Polyamidmasse. Hierdurch wird ein Polyamid mit hohem Polykondensationsgrad erhalten.

Die Erfindung hat sich daher die weitere Aufgabe gestellt, ein einfaches und zuverlässiges Verfahren zur schnellen Erhöhung der Molmassen von Polyamiden in der Schmelze zu entwickeln, welches im technischen Maßstab in einem Reaktor, vorzugsweise einem Reaktionsextruder durchführbar ist.

Diese Aufgabe kann überraschend einfach gelöst werden, dadurch, daß als Additiv Terephthaldialdehyd und/oder seine Acetale von C₁ - C₄ Alkoholen verwendet werden. Dieses Additiv wird in Mengen von 0,1 bis 1,0 Gew.-% zugesetzt und führt dabei zu ausgezeichneten Ergebnissen.

Die Menge an zugesetztem Additiv hängt vor allem davon ab, in welchem Maße eine Erhöhung der Molmassen und damit auch eine Erhöhung der Viskosität erwünscht ist. Ein Mol Terephthaldialdehyd ist in der Lage, maximal zwei freie Aminogruppen zu binden. Darüber hinausgehende Zusätze bleiben wirkungslos, erhöhen in unnötiger Weise die Kosten und können gegebenenfalls sogar zu einer Verschlechterung der sonstigen Eigenschaften des Polyamids führen. Vorzugsweise wird daher die Menge des Additivs so gewählt, daß weniger als ein halbes Mol pro freier Aminogruppe zugegeben wird.

Gegebenenfalls kann die jeweils gewünschte optimale Menge auch in Vorversuchen ermittelt werden, so daß im technischen Maßstab vorhersehbare und reproduzierbare Verbesserungen der Molmassen und der Viskosität erzielt werden.

Das erfindungsgemäße Verfahren kann für alle Arten von Polyamiden eingesetzt werden, insbesondere Polyamid 6, Polyamid 6.6, Polyamide 11 und 12 sowie Polyamide 6.9, 6.10, 6.12 und 6.13.

Von besonderer Bedeutung ist das erfindungsgemäße Verfahren für den Einsatz von wiedergewonnenen Polyamiden, da das Recycling eine thermische Belastung darstellt, die im allgemeinen auch zu einem Abbau der Molmassen und einer Erniedrigung der Viskosität führt. Recycelte Polyamide können somit erfindungsgemäß für gleiche oder ähnliche Zwecke eingesetzt werden für die sie ursprünglich eingesetzt waren.

Die Umsetzung der Polyamide mit dem erfindungsgemäßen Additiv erfolgt sehr rasch, so daß unnötig lange zusätzliche thermische Belastungen bei der Verarbeitung vermieden werden können.

Die Zugabe des Additivs kann in üblicherweise erfolgen im festen oder geschmolzenen Zustand oder in einem inerten Lösungsmittel gelöst. Sofern niedrigsiedende Lösungsmittel verwendet werden oder die Acetale von niederen Alkoholen, können diese in Gasform wieder entfernt werden. Mehrstufige Extruder besitzen im allgemeinen auch Entgasungszonen, in denen derartige Dämpfe entfernt werden können.

Die folgenden Beispiele sollen diesen erfindungsgemäßen Effekt näher erläutern:

### Beispiele 1 bis 12

In den Beispielen wurde Melamincyanurat der Firma Chemie Linz mit 50 mm Korngröße (d₅₀) verwendet. Als Basis-Polymer wird Polyamid 6 mit einer relativen Viskosität von ηᵣₑₗ = 1,68 (bei 25°C in 98 %igen H₂SO₄; 500mg/100ml Lösung) eingesetzt. Polyamid 66 wird mit einer relativen Viskosität von 1,64 eingesetzt gemessen bei 23°C in 500 mg/100 ml 96 %iger H₂SO₄. In einem ZSK-30/Werner/Pfleiderer werden bei 305 U/min 20 kg/h Durchsatz an Polyamid 6, Melamincyanurat und Terephthaldialdehyd mit einem Schmelzpunkt von 112 - 115°C zudosiert (siehe Tabelle 1).

Als Verbrennungstest wurd der Verbrennungstest UL-94 (Under-writers Laboratories, Inc., USA) bei vertikaler Verbrennung vorgenommen. Die Izod-Schlagfestigkeit wurde gemäß ASTM D-256 gemessen, wobei eine Testprobe mit einer Breite von 1,3 mm und einer Kerbe verwendet wird. Die Charpy-Schlagfestigkeit wird gemäß DIN 53 453 gemessen.

Tabellen 1 und 3 zeigen die Zusammensetzungen der erfindungsgemäßen Polyamide 6 und 66 (Beispiele 2 bis 6 und 8 bis 12).

Beispiele 1 und 7 sind Vergleichsbeispiele aus dem Stand der Technik.

Tabellen 2 und 4 zeigen die mechanischen Eigenschaften der erfindungsgemäßen Polyamide.

Die Ergebnisse der Tabellen 2 und 4 verdeutlichen, daß im Vergleich zu den Vergleichsbeispielen 1 und 7 bei Erhaltung des Flammschutzeffektes der Polyamide eine signifikante Erhöhung der Schlagfestigkeit, der Kerbschlagfestigkeit und der relativen Viskosität erfolgt.

**Tabelle 1:**

| Zusammensetzung bei Polyamid 6 | | | | |
|---|---|---|---|---|
| Nr. | Beispiel Polymer | Polyamid 6 in Gew.Teilen | Terephthaldialdehyd in Gew.Teilen | Flammschutzmittel Melamincyanurat in Gew. Teilen |
| 1 | PA6 gemäß DE 2740092C3 Beispiel 2 | 87,5 | - | 12,6 |
| 2 | | 87,4 | 0,1 | 12,6 |
| 3 | | 91,9 | - | 8 |
| 4 | | 91,8 | 0,1 | 8 |
| 5 | | 91,8 | 0,2 | 8 |

**Tabelle 2:**

| mechanische Eigenschaften bei Polyamid 6 | | | | | | |
|---|---|---|---|---|---|---|
| Nr. | UL 94 Flammschutzeffekt Prüfkörperdicke in mm | | | Izod Schlagfestigkeit ASTM D-256 | Charpy Kerbschlagfestigkeit DIN 53 453 | ηᵣₑₗ Viskosität |
| | 0,8 | 1,6 | 3,2 | KJ/m² | KJ/m² | |
| 1 | V-0 | V-0 | V-0 | 3,3 | 3,2 | - |
| 2 | V-0 | V-0 | V-0 | 4,2 | 4,0 | 1,77 |
| 3 | V-2 | V-0 | V-0 | 7,6 | 7,3 | 1,72 |
| 4 | V-0 | V-0 | V-0 | 8,2 | 8,0 | 1,81 |
| 5 | V-2 | V-0 | V-0 | 6,7 | 8,9 | 1,83 |

In Beispiel 6) wurde zur Zusammensetzung aus Beispiel 3) 2 Gew.Teile Talkum hinzugefügt, nach UL 94 wurde die Klassifizierung V-0 beim einem Izod von 7,8 KJ/m² bzw. Charpy von 7,7 KJ/m² erreicht.

**Tabelle 3:**

| Zusammensetzung bei Polyamid 66 | | | | | | |
|---|---|---|---|---|---|---|
| Nr. | Beispiel Polymer | Polyamid 66 in Gew. Teilen | Terephthaldialdehyd in Gew. Teilen | Melamincyanurat in Gew. Teilen | Melamin | CaS |
| 7 | Beispiel 5 aus DE 208486C2 | 89,7 | - | 6 | 4,0 | 0,3 |
| 8 | | 89,6 | 0,1 | 6 | 4,0 | 0,3 |
| 9 | | 91,8 | 0,2 | 6 | 4,0 | 0,3 |
| 10 | | 92,0 | - | 8 | - | 0,3 |
| 11 | | 91,8 | 0,2 | 8 | - | - |

**Tabelle 4:**

| mechanische Eigenschaften bei Polymid 66 | | | | | | |
|---|---|---|---|---|---|---|
| Nr. | UL 94 Flammschutzeffekt Prüfkörperdicke in mm | | | Izod Schlagfestigkeit ASTM D-256 | Charpy Kerbschlagfestigkeit DIN 53 453 | ηᵣₑₗ Viskosität |
| | 0,8 | 1,6 | 3,2 | KJ/m² | KJ/m² | |
| 7 | V-0 | V-0 | V-0 | 2 | 2,3 | - |
| 8 | V-0 | V-0 | V-0 | 4,4 | 5,8 | 1,68 |
| 9 | V-0 | V-0 | V-0 | 4,1 | 6,3 | 1,73 |
| 10 | V-2 | V-0 | V-0 | 5,6 | 5,4 | 1,65 |
| 11 | V-0 | V-0 | V-0 | 6,7 | 5,8 | 1,77 |

In Beispiel 12 wurde zur Zusammensetzung aus Beispiel 11 2 Gew.% Talkum hinzugegeben. Nach der Klassifizierung UL V-0 wurde eine Kerbschlagfestigkeit nach DIN 53 453 von 5,9 KJ/m² erreicht.
CaS = Calciumstearat

### Beispiele 13 bis 17

Als Basis Polymer wurde Polyamid 6 eingesetzt mit einer relativen Lösungsviskosität ηᵣₑₗ = 1,79 (500 mg/100 ml, konzentrierte Schwefelsäure, 25°C). In einem ZSK-30/Werner & Pfleiderer-Extruder wurden 25 kg/h Polyamid 6 aufgeschmolzen und bei 300 U/min in die Schmelze die folgenden Mengen Terephthaldialdehyd zudosiert. Terephthaldialdehyd besitzt einen Schmelzpunkt von 112 bis 115°C. Das extrudierte Polyamid wurde erneut gemessen und ergab die in der nachfolgenden Tabelle 5 zusammengestellten Werte:

**Tabelle 5**

| Versuch Nr. | Polyamid 6 Gew.-% | Additiv Gew.-% | ηᵣₑₗ |
|---|---|---|---|
| 13 | 100 | - | 1,79 |
| 14 | 99,9 | 0,1 | 1,87 |
| 15 | 99,8 | 0,2 | 1,93 |
| 16 | 99,6 | 0,4 | 2,06 |
| 17 | 99,4 | 0,6 | 2,18 |

### Beispiele 18 bis 22

Die folgenden Beispiele sollen das erfindungsgemäße Verfahren zur Erhöhung der Molmasse näher erläutern:

Als Basis Polymer wurde Polyamid 6.6 mit einer relativen Lösungsviskosität ηᵣₑₗ = 1,78 (500 mg/100 ml, konzentrierte Schwefelsäure, 25°C) eingesetzt. Das Material wurde wie im Beispiel 13 beschrieben mit Terephthaldialdehyd versetzt und extrudiert.

Die Eigenschaften sind in der nachfolgenden Tabelle 6 zusammengestellt:

**Tabelle 6**

| Versuch Nr. | Polyamid 6.6 Gew.-% | Additiv Gew.-% | ηᵣₑₗ |
|---|---|---|---|
| 18 | 100 | - | 1,78 |
| 19 | 99,9 | 0,1 | 1,83 |
| 20 | 99,8 | 0,2 | 1,94 |
| 21 | 99,6 | 0,4 | 2,03 |
| 22 | 99,4 | 0,6 | - |

Im Versuch Nr. 22 konnte die Lösungsviskosität nicht mehr ermittelt werden, da das Polyamid 6.6 nicht mehr in Lösung ging.

### Beispiele 23 bis 25

In den Versuchen 23 bis 25 wird das Basis-Polymer Polyamid 6 wie aus den Versuchen 13 bis 17 eingesetzt.

In einem ZSK 30/Werner & Pfleiderer werden 25 kg/h PA 6 aufgeschmolzen und bei 300 U/min in die Schmelze folgende Additivmengen Terephthaldialdehyd-tetramethylacetal mit einem Schmelzpunkt von 50 - 53°C zudosiert. Terephthaldialdehydtetramethylacetal wird nach der Vorschrift von Ernst-Schmitz, Chemische Berichte, Jahrgang 91, 1958, hergestellt. Die Eigenschaften sind in der Tabelle 7 zusammengestellt.

**Tabelle 7**

| Versuch Nr. | Polyamid 6 Gew.-% | Additiv Gew.-% | ηᵣₑₗ |
|---|---|---|---|
| 13 | 100 | - | 1,79 |
| 23 | 99,9 | 0,1 | 1,83 |
| 24 | 99,8 | 0,2 | 1,89 |
| 25 | 99,5 | 0,5 | 1,99 |

### Beispiele 26 bis 30

In den Versuchen 26 bis 30 wird das Basis-Polymer Polyamid 6.6 mit einer relativen Lösungsviskosität ηᵣₑₗ = 1,80 (500 mg/ 100ml, Konz H₂SO₄, 25°C) eingesetzt.

In einem ZSK 30/Werner & Pfleiderer werden 25 kg/h PA 6.6 aufgeschmolzen und bei 300 U/min in die Schmelze folgende Additivmengen Terephthaldialdehyd-tetramethylacetal mit einem Schmelzpunkt von 50 - 53°C zudosiert. Die Eigenschaften sind in der Tabelle 8 zusammengestellt.

**Tabelle 8**

| Versuch Nr. | Polyamid 6.6 Gew.-% | Additiv Gew.-% | ηᵣₑₗ |
|---|---|---|---|
| 26 | 100 | - | 1,80 |
| 27 | 99,8 | 0,2 | 1,84 |
| 28 | 99,7 | 0,3 | 1,87 |
| 29 | 99,5 | 0,5 | 1,95 |
| 30 | 99,2 | 0,8 | 2,05 |

Die Beispiele zeigen, daß bei Zugabe von Additiv in Mengen von 0,1 bis 1 Gew.-% eine signifikante Viskositätserhöhung und damit auch eine Erhöhung der Molmasse erreicht wird.

## Patentansprüche

1. Polyamidmasse enthaltend bezogen auf die Polyamidmasse 0,1 bis 1 Gew.-% Terephthaldialdehyd und/oder seine Acetale von C₁ - C₄ Alkoholen.

2. Polyamidmasse nach Anspruch 1 enthaltend bezogen auf die Polyamidmasse 3 bis 30 Gew.-% Melamin und/oder Melamincyanurat.

3. Polyamidmasse nach Anspruch 1 oder 2, dadurch gekennzeichnet, daß zusätzlich Talkum enthalten ist.

4. Polyamidmasse nach Anspruch 1 bis 3, dadurch gekennzeichnet, daß bezogen auf die Polyamidmasse 5 bis 25 Gew.-% Melamin und/oder Melamincyanurat und 0,1 bis 0,6 Gew.-% Terephthaldialdehyd und/oder seine Acetale von C₁ - C₄ Alkoholen enthalten sind.

5. Polyamidmasse nach Anspruch 1 bis 4, dadurch gekennzeichnet, daß zusätzlich Färbemittel, Füll- und Verstärkungsstoffe, Stabilisatoren und Plastifiziermittel enthalten sein können.

6. Verfahren zur Herstellung der Polyamidmassen nach Ansprüchen 1 bis 5, dadurch gekennzeichnet, daß die Komponenten mit dem Polyamid gemischt und anschließend geschmolzen und gegebenenfalls extrudiert werden.

7. Verfahren zur Erhöhung der Schlagfestigkeit, der Kerbschlagfestigkeit und der Viskosität von flammfesten, halogenfreien Polyamiden durch Zusatz von 3 bis 30 Gew.-% Melamin und/oder Melamincyanurat und 0,1 bis 1 Gew.-% Terephthaldialdehyd und/oder seine Acetale von C₁ - C₄ Alkoholen.

8. Verfahren nach Anspruch 7, dadurch gekennzeichnet, daß zusätzlich Talkum zugegeben wird.

9. Verfahren nach Anspruch 7 oder 8, dadurch gekennzeichnet, daß 5 bis 25 Gew.-% Melamin und/oder Melamincyanurat und 0,1 bis 0,6 Gew.-% Terephthaldialdehyd und/oder seine Acetale von C₁ - C₄ Alkoholen zugegeben werden.

10. Verfahren zur Erhöhung der Molmassen von Polyamidmassen in der Schmelze durch Additive, dadurch gekennzeichnet, daß als Additiv, bezogen auf die Polyamid massen, 0,1 bis 1 Gew.-% Terephthaldialdehyd und/oder seine Acetale von C₁ - C₄ Alkoholen verwendet werden.

## Claims

1. Polyamide mass containing 0.1 to 1 wt.% terephthaldialdehyde in regard to the polyamide mass and/or its acetals of C₁ - C₄ alcohols.

2. Polyamide mass according to claim 1 containing 3 to 30 wt.% melamine and/or melamine cyanurate in regard to the polyamide mass.

3. Polyamide mass according to claims 1 or 2, wherein additional talc is contained.

4. Polyamide mass according to claims 1 to 3, wherein, in reference to the polyamide mass, 5 to 25 wt.% melamine and/or melamine cyanurate and 0.1 to 0.6 wt.% terephthaldialdehyde and/or its acetals of C₁ - C₄ alcohols are contained.

5. Polyamide mass according to claims 1 to 4, wherein additional coloring agents, fillers, strengthening agents, stabiliziers and plasticizers can be contained.

6. Process for producing the polyamide masses according to claims 1 to 5, wherein the components are mixed with the polyamide and subsequently melted and optionally extruded.

7. Process for increasing the shock resistance, notched impact resistance and viscosity of flameproof, halogen-free polyamides through the addition of 3 to 30 wt.% melamine and/or melamine cyanurate and 0.1 to 1 wt.% terephthaldialdehyde and/or its acetals of C₁ - C₄ alcohols.

8. Process according to claim 7, wherein additional talc is added.

9. Process according to claim 7 or 8, wherein 5 to 25 wt.% melamine and/or melamine cyanurate and 0.1 to 0.6 wt.% terephthaldialdehyde and/or its acetals of C₁ - C₄ alcohols are added.

10. Process to increase the molecular mass of polyamide masses through additives to the melt, wherein 0.1 to 1 wt.% terephthaldialdehyde in regard to the polyamide mass and/or its acetals of C₁ - C₄ alcohols are applied as additives.

## Revendications

1. Masse de polyamide contenant par rapport à la masse de polyamide de 0,1 à 1 % en poids de dialdéhyde téréphtalique et/ou ses acétaux d'alcools C₁ - C₄.

2. Masse de polyamide selon la revendication 1, contenant par rapport à la masse de polyamide de 3 à 30 % en poids de mélamine et/ou de cyanurate de mélamine.

3. Masse de polyamide selon la revendication 1 ou 2, caractérisée par le fait que du talc est en sus contenu.

4. Masse de polyamide selon la revendication 1 à 3, caractérisée par le fait que, par rapport à la masse de polyamide, de 5 à 25 % en poids de mélamine et/ou de cyanurate de mélamine et de 0,1 à 0,6 % en poids de dialdéhyde téréphtalique et/ou ses acétaux d'alcools C₁ - C₄ sont contenus.

5. Masse de polyamide selon la revendication 1 à 4, caractérisée par le fait que des colorants, des matières de remplissage et de renforcement, des stabilisants et des plastifiants peuvent en sus être contenus.

6. Procédé de fabrication des masses de polyamide selon les revendications 1 à 5, caractérisé par le fait que les composants sont mélangés avec le polyamide et sont ensuite fondus et, le cas échéant, extrudés.

7. Procédé destiné à augmenter la résistance au choc, la résistance au choc sur barreau entaillé ainsi que la viscosité de polyamides résistants à la flamme et libres d'halogènes, par addition de 3 à 30 % en poids de mélamine et/ou de cyanurate de mélamine et de 0,1 à 1 % en poids de dialdéhyde téréphtalique et/ou ses acétaux d'alcools C₁ - C₄.

8. Procédé selon la revendication 7, caractérisé par le fait que l'on ajoute en sus du talc.

9. Procédé selon la revendication 7 ou 8, caractérisé par le fait que l'on ajoute de 5 à 25 % en poids de mélamine et/ou de cyanurate de mélamine et de 0,1 à 0,6 % en poids de dialdéhyde téréphtalique et/ou ses acétaux d'alcools C₁ - C₄.

10. Procédé destiné à augmenter les masses molaires de masses de polyamide dans la fonte par des additifs, caractérisé par le fait que l'on utilise comme additif, par rapport aux masses de polyamide, de 0,1 à 1 % en poids de dialdéhyde téréphtalique et/ou ses acétaux d'alcools C₁ - C₄.
